# EUROPEAN PATENT APPLICATION

(11) **EP 2 436 652 A2**
(43) Date of publication of application: **04.04.2012**
(21) Application number: 10780738.0
(22) Date of filing: 24.05.2010
(51) Int. Cl.: C02F 1/04, C02F 1/44, B01D 61/02, B63B 35/28

(54) **SEAWATER DESALINATION PLANT TO BE INSTALLED ON A BARGE, AND METHOD FOR INSTALLING SAME**

(30) Priority: 26.05.2009 KR 20090045898
(71) Applicant: DAEWOO SHIPBUILDING & MARINE ENGINEERING CO., LTD, Seoul 100-180 (KR)
(72) Inventor: KWON, Hyuk, Ansan-si Gyeonggi-do 425-721 (KR); LEE, Eun Bae, Seoul 135-993 (KR); KIM, Hyun Jin, Gwangju 502-774 (KR); AHN, Sung Il, Seoul 134-070 (KR)
(74) Representative: Intès, Didier Gérard André
(86) International application number: PCT/KR2010/003224
(87) International publication number: WO 2010/137827

(57) **Abstract**

Provided are a desalination plant mounted on a barge and a method for placing the same. The barge is constructed to float on the sea, and the desalination plant is constructed to draw seawater from the sea and desalinate the seawater into freshwater. The desalination plant mounted on the barge is placed on a heavy lift vessel, tugged by a tugboat, and installed in the seashore of a water-scarcity area or island area.

## Description

### TECHNICAL FIELD

The present invention relates to a desalination plant for desalinating seawater and a method for placing the same, and more particularly, to a desalination plant mounted on a barge, which is constructed to float on the sea, and a method for placing the same.

### BACKGROUND ART

Recently, as the industry develops with the increase of the world's population, the amount of water used to improve the quality of life has increased. However, the amount of water resources which may be used by humans corresponds to 3% of the total amount of water existing in the earth. Furthermore, the supply potential has rapidly decreased due to the spread of water pollution or the like. Accordingly, the water shortage becomes so serious as to cause international conflicts in some areas.

However, when the technology for desalinating seawater, which occupies 3/4 or more of the earth's surface and corresponds to 97% of water existing in the earth, and using the desalinated water for the human's life, that is, the desalination technology is put to practical use, this may be an alternative capable of solving the water shortage problem.

Recently, many researches have been conducted on the desalination technology by advanced countries and water scarcity countries. In particular, much attention has been paid to a desalination technology using an evaporation method, a desalination technology using a reverse osmosis method, and a desalination technology in which the evaporation method and the reverse osmosis method are combined.

In general, a desalination plant is constructed in such a manner as to be fixed on land. Such a fixed-type desalination plant cannot be moved, and a lot of costs may be required for the purchase of a construction site and the foundation work. Furthermore, a lot of time may be required for the construction. Once a desalination plant is constructed, the use of the desalination plant is limited only to the construction place.

Furthermore, since water scarcity areas or island areas where a fixed-type desalination plant is to be constructed generally have a poor weather condition or operation condition, there are difficulties in constructing the fixed-type desalination plant.

Furthermore, it is difficult to look for construction workers including construction engineers in a local site where the fixed-type desalination plant is to be constructed.

Furthermore, the construction of the fixed-type desalination plant may destroy forests and contaminate the surroundings.

Furthermore, the above-described areas are short of electricity as well as freshwater in most cases. Therefore, when a power plant for generating electricity is constructed in a fixed type, the above-described problems may occur in the same manner.

### DISCLOSURE

### TECHNICAL PROBLEM

An embodiment of the present invention is directed to a desalination plant mounted on a barge, which is constructed to float on the sea and desalinate seawater.

### TECHNICAL SOLUTION

According to an aspect of the present invention, there is provided a desalination plant mounted on a barge which is constructed to float on the sea. The desalination plant is constructed to draw seawater from the sea and desalinate the seawater into freshwater.

The barge may include a plurality of blocks assembled to each other, each of the blocks having an air chamber formed therein.

The block may be made of steel.

The desalination plant may include an evaporation-type desalination plant, and the evaporation-type desalination plant may include: a seawater introduction unit that forcibly introduces seawater into the evaporation-type desalination plant; and an evaporator that condenses steam generated by evaporating the seawater and produces freshwater by collecting the condensed water.

The evaporation-type desalination plant may further include a chlorine gas injector that is connected to the seawater introduction unit and injects chlorine gas into the seawater introduction unit, in order to prevent organisms introduced with the seawater from blocking a seawater path.

The evaporation-type desalination plant may further include a chemical agent pre-processor that is installed at a previous stage of the evaporator and injects chemical agents into the seawater to perform a chemical agent treatment on the seawater, before the evaporator evaporates the seawater.

The evaporation-type desalination plant may further include a boiler that is connected to the evaporator and serves as a heat source for supplying heat required for evaporating the seawater.

The evaporation-type desalination plant may further include a mineral adder that is installed at a later stage of the evaporator and adds minerals into distilled water produced by the evaporator, in order to produce freshwater according to drinking water standards.

The desalination plant may include a reverse osmosis desalination plant, and the reverse osmosis desalination plant may include: a seawater introduction unit that forcibly introduces seawater into the reverse osmosis desalination plant; and a reverse osmosis module that produces freshwater by applying pressure to the seawater in a reverse osmosis manner.

The reverse osmosis desalination plant may further include a dual media filter that is installed at a later stage of the seawater introduction unit and adjusts the quality of the seawater to a quality required by a reverse osmosis membrane of the reverse osmosis module.

The reverse osmosis desalination plant may further include: a backwash water storage tank that is connected to the dual media filter and stores backwash water for backwashing the dual media filter; and a wastewater treatment tank that is connected to the dual media filter and treats the contaminated backwash water after the dual media filter is backwashed.

The reverse osmosis desalination plant may further include a chemical agent pre-processor that is installed at a previous stage of the reverse osmosis module and injects chemical agents into the seawater to perform a chemical agent treatment on the seawater, before the reverse osmosis module applies pressure to the seawater in a reverse osmosis manner.

The reverse osmosis desalination plant may further include a high-pressure pump that is connected to the reverse osmosis module and serves as a pressure supply source for supplying pressure required for pressurizing the seawater.

The reverse osmosis desalination plant may further include a safety filter that is installed between the chemical agent pre-processor and the reverse osmosis module and protects a reverse osmosis membrane of the reverse osmosis module and the high-pressure pump.

The desalination plant may include a composite desalination plant in which an evaporation-type desalination plant and a reverse osmosis desalination plant are constructed together.

The barge and the desalination plant may be separately built in a shipyard, and the desalination plant may be then mounted on the barge.

When a power plant is mounted on the barge having the desalination plant installed thereon, electricity and steam produced by the power plant may be used for desalinating seawater, and extra electricity may be provided to demand users in the neighborhood. Therefore, the power plant may be additionally installed.

On the barge, a power plant manufactured in a shipyard may be mounted.

According to another aspect of the present invention, there is provided a method for placing a desalination plant mounted on a barge in an actual place of use. The barge is constructed to float on the sea, and the desalination plant is constructed to draw seawater from the sea and desalinate the seawater into freshwater, and the desalination plant mounted on the barge is placed on a heavy lift vessel, tugged by a tugboat, and installed in the seashore of a water-scarcity area or island area.

The barge of the desalination plant may be moored by an anchor in a state in which the barge is set to float on the sea adjacent to the seashore of the water-scarcity area or island area.

The barge of the desalination plant may be moored by a fixation structure in a state in which the barge is set to float on the sea adjacent to the seashore of the water-scarcity area or island area.

The barge of the desalination plant is buried in land adjacent to the seashore of the water-scarcity area or island area.

A freshwater tank may be installed on the land adjacent to the seashore of the water-scarcity area or island area, and the freshwater produced by the desalination plant is stored in the freshwater storage tank.

A power plant may be mounted on the barge.

It should be understood that different embodiments of the invention, including those described under different aspects of the invention, are meant to be generally applicable to all aspects of the invention. Any embodiment may be combined with any other embodiment unless inappropriate. All examples are illustrative and non-limiting.

### ADVANTAGEOUS EFFECTS

The desalination plant mounted on the barge according to the embodiments of the present invention may be moved on the sea after the desalination plant is built. Therefore, when the desalination plant is disposed at the seashore of a water-scarcity area or an island area, the desalination plant may be used while being moved depending on places and conditions. Furthermore, the cost required for building the barge is smaller than the costs required for the purchase of a construction site and the foundation work in the existing fixed-type desalination plant, and the building time is reduced. Furthermore, the desalination plant mounted on the barge is completely built in a shipyard and then moved to a place where the desalination plant is to be used. Therefore, it is possible to reduce a burden of looking for construction workers including construction engineers in the field, and the desalination plant may be constructed regardless of a local weather condition or operation condition. Furthermore, the forest of an area in which the desalination plant is to be installed does not need to be destroyed, and it is possible to get rid of concern about the contamination around the desalination plant.

Furthermore, when the power plant as well as the desalination plant is mounted on the barge, the electricity and steam produced by the power plant may be used for the desalination plant, and extra electricity may be provided to demand users on land. Therefore, the electricity and steam produced by the power plant maybe efficiently used while the electricity shortage on the land is covered.

### BRIEF DESCRIPTION OF THE DRAWINGS

FIG. 1 is a schematic view of a desalination plant mounted on a barge according to an embodiment of the present invention.
FIG. 2 is a block diagram illustrating blocks composing a desalination plant according to a first embodiment of the present invention.
FIG. 3 is a block diagram illustrating blocks composing a desalination plant according to a second embodiment of the present invention.
FIG. 4 is a schematic diagram illustrating a process of manufacturing the desalination plant mounted on the barge according to the embodiment of the present invention.
FIG. 5 is a diagram illustrating a process of moving the desalination plant mounted on the barge according to the embodiment of the present invention.
FIGS. 6 to 8 are diagrams illustrating a state in which the desalination plant mounted on the barge according to the embodiment of the present invention is installed in actual places of use.
FIGS. 9A and 9B are schematic diagrams illustrating constructions in which a power plant is mounted on the desalination plants according to the first and second embodiments of the present invention, respectively.

### BEST MODE FOR THE INVENTION

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

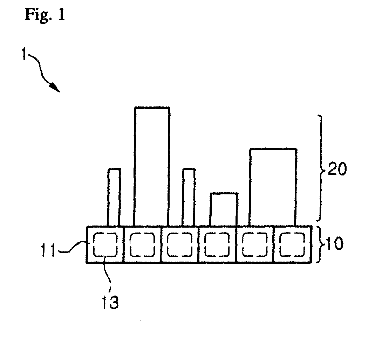

FIG. 1 is a schematic view of a desalination plant mounted on a barge according to an embodiment of the present invention. Referring to FIG. 1, the desalination plant according to the embodiment of the present invention is mounted on a barge. In this embodiment, the desalination plant including the barge 10 is represented by reference numeral 1, and the desalination plant mounted on the barge 10 is represented by reference numeral 20.

The barge 10 is constructed in such a manner as to float on the sea, and includes a plurality of blocks 11 assembled to each other. Each of the blocks 11 includes an air chamber 13 formed therein.

Such a block 11 may be made of steel.

The desalination plant 20 is a facility which draws seawater from the sea, desalinates the seawater, and then supplies the desalinated water to places of use. The desalination plant 20 performs a process of desalinating seawater into freshwater by using an evaporation method or reverse osmosis method.

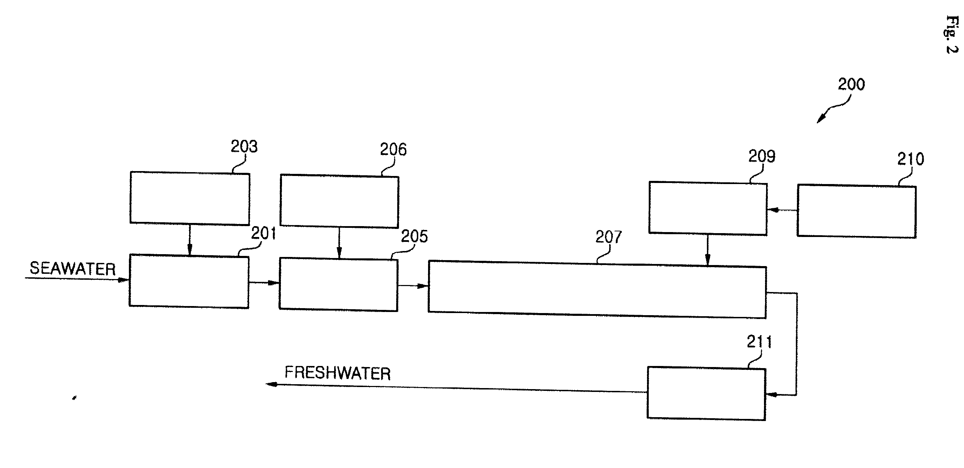

FIG. 2 is a block diagram illustrating blocks composing a desalination plant according to a first embodiment of the present invention. The desalination plant according to the first embodiment of the present invention is an evaporation-type desalination plant which desalinates seawater into freshwater by using an evaporation method. In this specification, the evaporation-type desalination plant according to the first embodiment of the present invention is represented by reference numeral 200.

Referring to FIG. 2, the evaporation-type desalination plant 200 includes a seawater introduction unit 201, a chlorine gas injector 203, a chemical agent pre-processor 205, an evaporator 207, a boiler 209, and a mineral adder 211.

The seawater introduction unit 201 is a facility for forcibly introducing seawater which is raw water to be desalinated, into the desalination plant 200. The seawater introduction unit 201 may include a liquid introduction section such as a pump.

When the seawater is drawn by the seawater introduction unit 201, organisms such as fish, shellfish, and seaweeds in the sea may be introduced together. The organisms may adhere to a seawater path to block the seawater path. In order to prevent the organisms from blocking the seawater path, the seawater introduction unit 201 is connected to the chlorine gas injector 203 to inject chlorine gas into the seawater introduction unit 201. The injected chlorine gas is obtained by electrolyzing seawater.

The seawater introduced from the seawater introduction unit 201 is supplied to the evaporator 207 through the chemical agent pre-processor 205. The evaporator 207 is a desalination facility which condenses steam obtained by evaporating seawater and produces freshwater by collecting the condensed water, and includes a heat exchange tube for evaporating seawater through the heat exchange with heat supplied from outside and a condenser.

The evaporator 207 may adopt a multi-stage flash (MSF) distillation method in which the operation of condensing steam obtained by evaporating seawater is several times repeated to collect the condensed water. In this case, the evaporator 207 includes two or three stages.

The chemical agent pre-processor 205 is installed at the previous stage of the evaporator 207, and serves to inject chemical agents into seawater to perform a chemical agent treatment, before the evaporator 207 evaporates the seawater. The chemical agents injected by the chemical agent pre-processor 205 may include an anti-scale agent, an anti-foam agent, an oxygen scavenger and so on.

When the temperature of seawater is increased to evaporate the seawater through the evaporator 207, materials of which the solubility decreases with the increase of the temperature, among ions dissolved in the seawater, are precipitated to form scales on the inner wall of the heat exchange tube within the evaporator 207. The anti-scale agent is used to prevent the formation of the scales.

Furthermore, the anti-foam agent is a chemical agent for preventing foam from being formed in seawater which is being evaporated by the evaporator 207, and the oxygen scavenger is a chemical agent for removing oxygen which causes erosion of materials dissolved in seawater.

The chemical agent pre-processor 205 is connected to a chemical agent storage tank 206 for storing the chemical agents.

The evaporator 207 is connected to the boiler 209 serving as a heat source which supplies heat required for evaporating seawater. The boiler 209 generates steam and supplies the generated steam to the evaporator 207, and the steam supplied to the evaporator 207 is heat-exchanged with seawater inside the evaporator 207 to evaporate the seawater.

In order to prevent the damage of the boiler 209, air should be removed from water used to generate the steam in the boiler 209. For this operation, the boiler 209 is connected to a de-aerator 210.

The mineral adder 211 is installed at the later stage of the evaporator 207. Water produced by the evaporator 207 is distilled water which is not suitable for being used as drinking water. The mineral adder 211 adds minerals into the distilled water produced by the evaporator 207, in order to obtain freshwater according to the drinking water standard.

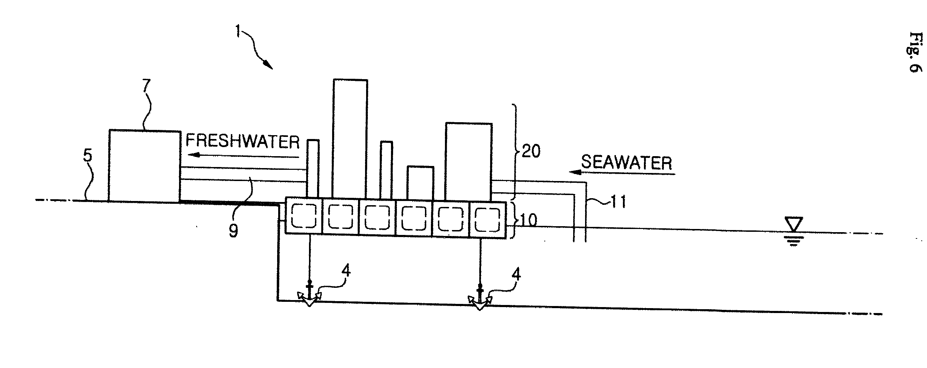

Referring to FIGS. 6 to 8, the freshwater produced through the mineral adder 211 is stored in a freshwater storage tank 7 installed on land.

The freshwater storage tank 7 is a water tank for storing the freshwater produced by the desalination plant 20. The freshwater storage tank 7 may store water of which the amount is equal to or more than the amount of freshwater produced per day. The freshwater stored in the freshwater storage tank 7 is supplied to places of use (city, village, factory and so on) by a high-pressure large pump.

The seawater introduction unit, the chlorine gas injector, the chemical agent pre-processor, the evaporator, and the mineral water are based on well-known techniques. Therefore, the detailed descriptions of the constructions and operational relationships thereof will be omitted in this specification.

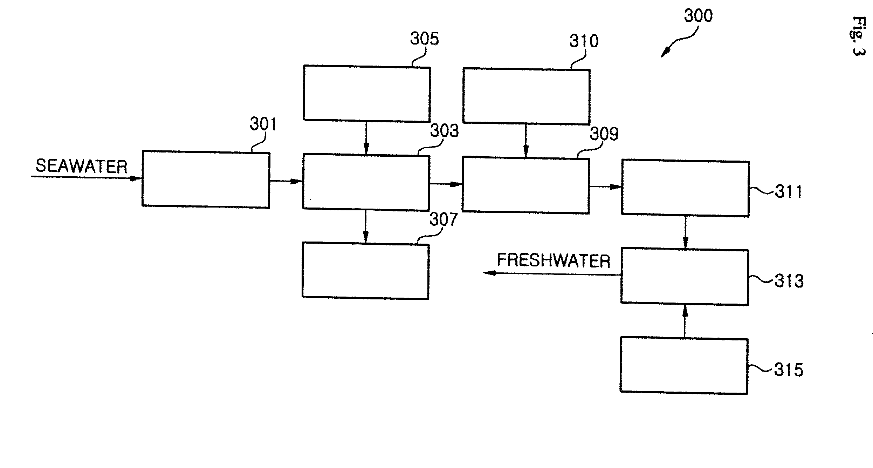

FIG. 3 is a block diagram illustrating blocks composing a desalination plant according to a second embodiment of the present invention. The desalination plant according to the second embodiment of the present invention is a reverse osmosis desalination plant which desalinates seawater into freshwater by using a reverse osmosis method. In this specification, the reverse osmosis desalination plant according to the second embodiment of the present invention is represented by reference numeral 300.

Referring to FIG. 3, the reverse osmosis desalination plant 300 includes a seawater introduction unit 301, a dual media filter 303, a backwash water storage tank 305, a wastewater treatment tank 307, a chemical agent pre-processor 309, a safety filter 311, a reverse osmosis module 313, and a high-pressure pump 315.

The seawater introduction unit 301 is a facility for forcibly introducing seawater which is raw water to be desalinated, into the reverse osmosis desalination plant 300. The seawater introduction unit 301 may include a liquid introduction section such as a pump.

In order to adjust the quality of the seawater introduced by the seawater introduction unit 310 to a quality required by a reverse osmosis membrane of the reverse osmosis module 313, the dual media filter 303 is installed at the later stage of the seawater introduction unit 301. The dual media filter 303 serves to remove colloids, floating solid bodies and so on from the seawater.

The reverse osmosis plant 300 periodically backwashes colloids and floating solid bodies accumulated on the dual media filter 303. For this operation, the dual media filter 303 is connected to the backwash water storage tank 305 for storing backwash water.

After the dual media filter 303 is backwashed, the contaminated backwash water is sent to the wastewater treatment tank 307 connected to the dual media filter 303. The wastewater treatment tank 307 treats the contaminated backwash water according to the environmental regulation limits and then discharges the treated water.

The seawater having passed through the dual media filter 303 is supplied to the reverse osmosis module 313 through the chemical agent pre-processor 309 and the safety filter 311. The reverse osmosis module 313 is a facility for producing freshwater by applying pressure to the seawater in a reverse osmosis method, and includes a reverse osmosis membrane and a membrane pressure vessel.

The chemical agent pre-processor 309 is installed at the previous stage of the reverse osmosis module 313 and injects chemical agents into the seawater to perform a chemical agent treatment on the seawater, before the reverse osmosis module 313 applies pressure to the seawater in a reverse osmosis method. The chemical agents injected by the chemical agent pre-processor 309 includes a coagulant, a polymer coagulant aid, H₂SO₄ (anti-scale agent), a dechlorinator, an antiscalant, and NaOH. NaOH is used to increase boron removal efficiency of the reverse osmosis membrane.

The chemical agent pre-processor 309 is connected to a chemical agent storage tank 310 for storing the chemical agents.

The reverse osmosis module 313 is connected to a high-pressure pump 315 serving as a pressure supply source for supplying pressure required for pressurizing the seawater.

The safety filter 311 is installed between the chemical agent pre-processor 309 and the reverse osmosis module 313. The safety filter 311 is a safety filter for protecting the reverse osmosis membrane of the reverse osmosis module 313 and the high-pressure pump 315.

Referring to FIGS. 6 to 8, the coarse freshwater produced by the reverse osmosis module 313 is stored in the freshwater storage tank 7 installed on land.

The freshwater storage tank 7 is a water tank for storing the freshwater produced by the desalination plant 20. The freshwater storage tank 7 may store water of which the amount is equal to or more than the amount of freshwater produced per day. The freshwater stored in the freshwater storage tank 7 is supplied to places of use (city, village, factory and so on) by a high-pressure large pump.

The seawater introduction unit, the dual media filter, the backwash water storage tank, the wastewater treatment tank, the chemical agent pre-processor, the safety filter, and the reverse osmosis module are based on well-known techniques. Therefore, the detailed descriptions of the constructions and operational relationships thereof will be omitted in this specification.

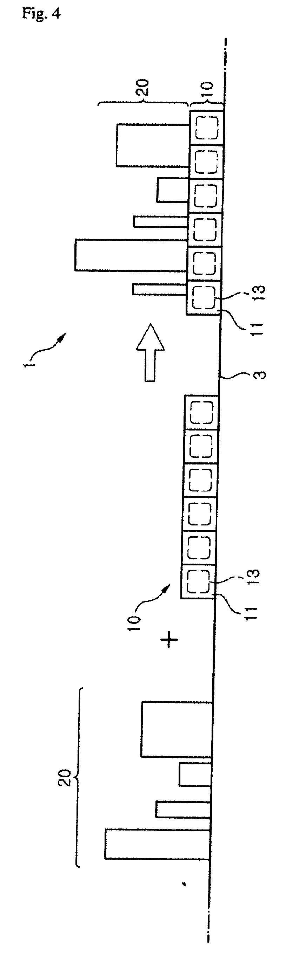

FIG. 4 is a schematic diagram illustrating a process of manufacturing the desalination plant mounted on the barge according to the embodiment of the present invention. Referring to FIG. 4, the desalination plant 1 mounted on the barge according to the embodiment of the present invention is built in a shipyard 3.

In the shipyard 3, the barge 10 and the desalination plant 20 are separately built. Then, the desalination plant 20 is mounted on the barge 10.

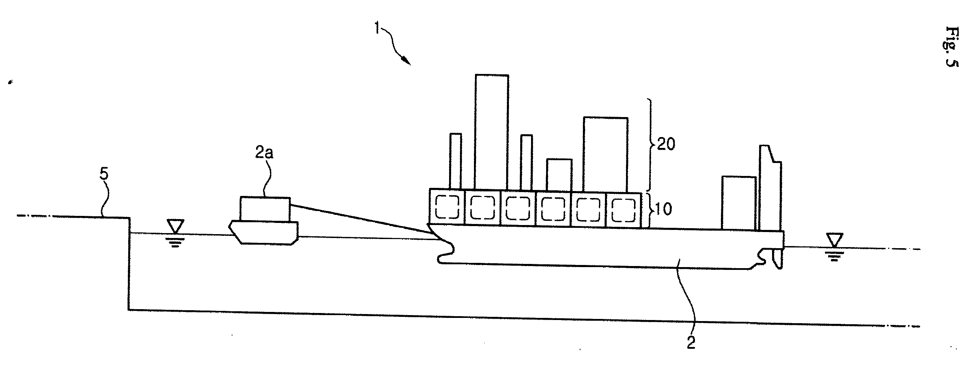

FIG. 5 is a diagram illustrating a process of moving the desalination plant mounted on the barge according to the embodiment of the present invention. Referring to FIG. 5, the desalination plant 20 mounted on the barge 10 in the shipyard 3 is placed on a heavy lift vessel 2 and then tugged to an actual place of use by a tugboat 2a.

FIGS. 6 to 8 are diagrams illustrating a state in which the desalination plant mounted on the barge according to the embodiment of the present invention is installed in actual places of use.

The desalination plant 1 mounted on the barge according to the embodiment of the present invention is tugged by the tugboat 2a and installed and operated in the seashore of a water-scarcity area or an island area.

FIG. 6 illustrates that the barge 10 of the desalination plant 1 tugged by the tugboat 2a is moored by using anchors 4 in a state in which the barge 10 floats on the sea adjacent to the seashore of the water-scarcity area or the island area. The anchors 4 are lowered from the barge 10 and stuck in the sea bottom to moor the barge 10.

In FIGS. 6 to 8, the land adjacent to the seashore of the water-scarcity area or the island area is represented by reference numeral 5.

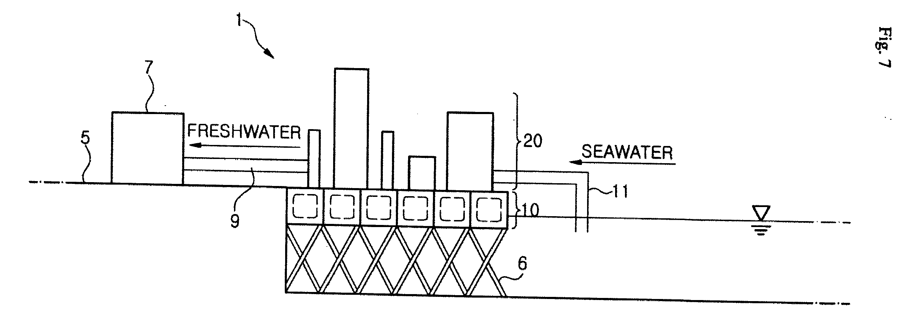

FIG. 7 illustrates that the barge 10 of the desalination plant 1 tugged by the tugboat 2a is fixed to the sea bottom by using a fixation structure 6 in a state in which the barge 10 floats on the sea adjacent to the seashore of the water-scarcity area or the island area. The fixation structure 6 is a support which is installed between the bottom surface of the barge 10 and the sea bottom and fixes the bottom surface of the barge 10 to the sea bottom.

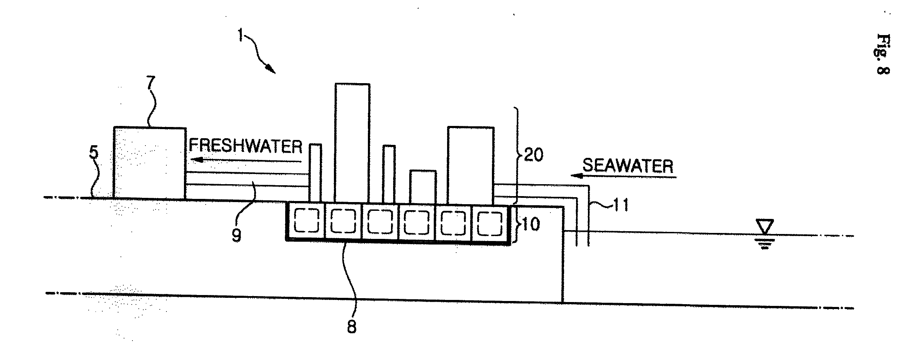

FIG. 8 illustrates that the barge 10 of the desalination plant 1 tugged by the tugboat 2a is buried in the land adjacent to the seashore of the water-scarcity area or the island area. FIG. 8 illustrates a state in which the barge 10 of the desalination plant 1 is buried in a hole 8 hollowed out in the land adjacent to the seashore of the water-scarcity area or the island area.

Referring to FIGS. 6 to 8, the freshwater storage tank 7 is installed on the land adjacent to the seashore of the water-scarcity area or the island area, and the freshwater produced by the desalination plant 1 mounted on the barge is supplied to the freshwater storage tank 7 through a freshwater supply pipe line 9. Furthermore, the seawater is introduced into the desalination plant 1 from the sea through a seawater introduction pipe line 11.

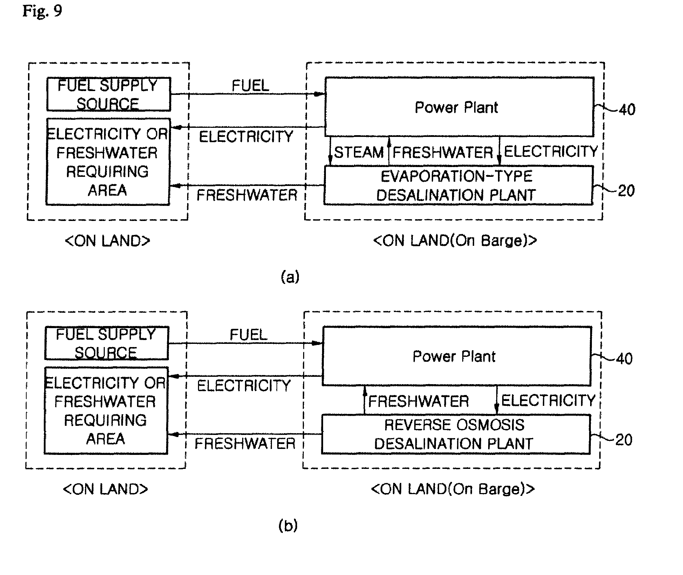

FIGS. 9A and 9B are schematic diagrams illustrating a construction in which a power plant is mounted on the desalination plants according to the first and second embodiments of the present invention, respectively. The desalination plant according to the first embodiment of the present invention is an evaporation-type desalination plant which desalinates seawater into freshwater by using the evaporation method, and the desalination plant according to the second embodiment of the present invention is a reverse osmosis desalination plant which desalinates seawater into freshwater by using the reverse osmosis method.

Referring to FIG. 9A, the evaporation-type desalination plant 20 and a power plant 40 are mounted together on the barge. Referring to FIG. 9B, the reverse osmosis desalination plant 30 and a power plant 40 are mounted together on the barge.

The power plant 40 receives fuel such as coal, diesel, LNG, or LPG from a fuel supply source on land and bums the received fuel to generate electricity. During this process, high-pressure gas and steam are generated.

The electricity generated by the power plant 40 is supplied to various equipments of the evaporation-type desalination plant 20 or the reverse osmosis desalination plant 30 or a living quarter which is a working and living space for workers. Extra electricity may be supplied to demand users on the land adjacent to the desalination plant.

The evaporation-type desalination plant 20 illustrated in FIG. 9A may utilize the high-temperature gas or steam generated by the power plant 40. For example, the high-temperature gas or steam may be used as a heat source for supplying heat to the desalination facility which exchanges heat with seawater and produces freshwater in the desalination plant 20, or may be used as a heat source for supplying hot water to the living quarter.

Furthermore, the freshwater produced by the evaporation-type or reverse osmosis desalination plant 20 or 30 may be supplied as raw water for generating high-temperature steam in the power plant or utilized for a variety of uses.

Furthermore, the evaporation-type desalination plant and the reverse osmosis desalination plant may be mounted together on a barge and used in a composite type. In this case, a proper plant may be used to produce freshwater, depending on the field's state. Furthermore, a large amount of freshwater may be produced. When the power plant is additionally installed in the composite desalination plant, electricity and steam may be efficiently used as described with reference to FIGS. 9A and 9B.

The desalination plant mounted on the barge according to the embodiments of the present invention may be moved on the sea after the desalination plant is built. Therefore, when the desalination plant is disposed at the seashore of a water-scarcity area or an island area, a fuel supply source such as coal or natural gas may be easily secured. Furthermore, the desalination plant may be used while being moved depending on places and conditions. In accordance with the desalination plant mounted on the barge according to the embodiments of the present invention, the cost required for building the barge is smaller than the costs required for the purchase of a construction site and the foundation work in the existing fixed-type desalination plant, and the building time is reduced. Furthermore, the desalination plant mounted on the barge according to the embodiments of the present invention is completely built in a shipyard and then moved to a place where the desalination plant is to be used. Therefore, it is possible to reduce a burden of looking for construction workers including construction engineers in the field, and the desalination plant may be constructed regardless of a local weather condition or operation condition. Furthermore, in accordance with the desalination plant mounted on the barge according to the embodiments of the present invention, the forest of an area in which the desalination plant is to be installed does not need to be destroyed, and it is possible to get rid of concern about the contamination around the desalination plant.

Furthermore, when the power plant is installed together with the desalination plant, the electricity and steam produced by the power plant and the freshwater produced by the desalination plant may be used together to increase the efficiency of the power plant and the desalination plant, and extra electricity may be provided to demand users on land.

While the present invention has been described with respect to the specific embodiments, it will be apparent to those skilled in the art that various changes and modifications may be made without departing from the spirit and scope of the invention as defined in the following claims.

## Claims

1. A desalination plant mounted on a barge which is constructed to float on the sea, wherein the desalination plant is constructed to draw seawater from the sea and desalinate the seawater into freshwater.

2. The desalination plant according to claim 1, wherein the barge comprises a plurality of blocks assembled to each other, each of the blocks having an air chamber formed therein.

3. The desalination plant according to claim 2, wherein the block is made of steel.

4. The desalination plant according to claim 1, wherein the desalination plant comprises an evaporation-type desalination plant, and
the evaporation-type desalination plant comprises:
a seawater introduction unit that forcibly introduces seawater into the evaporation-type desalination plant; and
an evaporator that condenses steam generated by evaporating the seawater and produces freshwater by collecting the condensed water.

5. The desalination plant according to claim 4, wherein the evaporation-type desalination plant further comprises a chlorine gas injector that is connected to the seawater introduction unit and injects chlorine gas into the seawater introduction unit, in order to prevent organisms introduced with the seawater from blocking a seawater path.

6. The desalination plant according to claim 4, wherein the evaporation-type desalination plant further comprises a chemical agent pre-processor that is installed at a previous stage of the evaporator and injects chemical agents into the seawater to perform a chemical agent treatment on the seawater, before the evaporator evaporates the seawater.

7. The desalination plant according to claim 4, wherein the evaporation-type desalination plant further comprises a boiler that is connected to the evaporator and serves as a heat source for supplying heat required for evaporating the seawater.

8. The desalination plant according to claim 4, wherein the evaporation-type desalination plant further comprises a mineral adder that is installed at a later stage of the evaporator and adds minerals into distilled water produced by the evaporator, in order to produce freshwater according to drinking water standards.

9. The desalination plant according to claim 1, wherein the desalination plant comprises a reverse osmosis desalination plant, and
the reverse osmosis desalination plant comprises:
a seawater introduction unit that forcibly introduces seawater into the reverse osmosis desalination plant; and
a reverse osmosis module that produces freshwater by applying pressure to the seawater in a reverse osmosis manner.

10. The desalination plant according to claim 9, wherein the reverse osmosis desalination plant further comprises a dual media filter that is installed at a later stage of the seawater introduction unit and adjusts the quality of the seawater to a quality required by a reverse osmosis membrane of the reverse osmosis module.

11. The desalination plant according to claim 10, wherein the reverse osmosis desalination plant further comprises:
a backwash water storage tank that is connected to the dual media filter and stores backwash water for backwashing the dual media filter; and
a wastewater treatment tank that is connected to the dual media filter and treats the contaminated backwash water after the dual media filter is backwashed.

12. The desalination plant according to claim 9, wherein the reverse osmosis desalination plant further comprises a chemical agent pre-processor that is installed at a previous stage of the reverse osmosis module and injects chemical agents into the seawater to perform a chemical agent treatment on the seawater, before the reverse osmosis module applies pressure to the seawater in a reverse osmosis manner.

13. The desalination plant according to claim 12, wherein the reverse osmosis desalination plant further comprises a high-pressure pump that is connected to the reverse osmosis module and serves as a pressure supply source for supplying pressure required for pressurizing the seawater.

14. The desalination plant according to claim 13, wherein the reverse osmosis desalination plant further comprises a safety filter that is installed between the chemical agent pre-processor and the reverse osmosis module and protects a reverse osmosis membrane of the reverse osmosis module and the high-pressure pump.

15. The desalination plant according to claim 1, wherein the desalination plant comprises a composite desalination plant in which an evaporation-type desalination plant and a reverse osmosis desalination plant are constructed together.

16. The desalination plant according to any one of claims 1 to 15, wherein the barge and the desalination plant are separately built in a shipyard, and the desalination plant is then mounted on the barge.

17. The desalination plant according to any one of claims 1 to 15, further comprising a power plant mounted on the barge.

18. The desalination plant according to claim 16, further comprising a power plant manufactured in the shipyard and mounted on the barge.

19. A method for placing a desalination plant mounted on a barge in an actual place of use, wherein the barge is constructed to float on the sea, and the desalination plant is constructed to draw seawater from the sea and desalinate the seawater into freshwater, and the desalination plant mounted on the barge is placed on a heavy lift vessel, tugged by a tugboat, and installed in the seashore of a water-scarcity area or island area.

20. The method according to claim 19, wherein the barge of the desalination plant is moored by an anchor in a state in which the barge is set to float on the sea adjacent to the seashore of the water-scarcity area or island area.

21. The method according to claim 19, wherein the barge of the desalination plant is moored by a fixation structure in a state in which the barge is set to float on the sea adjacent to the seashore of the water-scarcity area or island area.

22. The method according to claim 19, wherein the barge of the desalination plant is buried in land adjacent to the seashore of the water-scarcity area or island area.

23. The method according to any one of claims 19 to 22, wherein a freshwater tank is installed on the land adjacent to the seashore of the water-scarcity area or island area, and
the freshwater produced by the desalination plant is stored in the freshwater storage tank.

24. The method according to any one of claims 19 to 22, wherein a power plant is mounted on the barge.

25. The method according to claim 23, wherein a power plant is mounted on the barge.
